# EUROPÄISCHE PATENTANMELDUNG

(11) **EP 1 219 166 A2**
(43) Veröffentlichungstag der Anmeldung: **03.07.2002**
(21) Anmeldenummer: 01130483.9
(22) Anmeldetag: 20.12.2001
(51) Int. Cl.: A01J 5/007, A01J 5/08

(54) **Melkverfahren mittels Melkbecher mit einem zur Zitzenaufnahme bestimmten Schlauchteil mit Dünnwand-Massageflächen und Reduzierung des Vakuums im Innenraum beim Massagetakt**

(30) Priorität: 26.12.2000 DE 10064867; 16.02.2001 DE 10107747
(71) Anmelder: Happel, Fritz, D-87650 Baisweil (DE); Happel, Werner, 87650 Baisweil (DE)
(72) Erfinder: Happel, Fritz, D-87650 Baisweil (DE); Happel, Werner, 87650 Baisweil (DE)
(74) Vertreter: Manitz, Finsterwald & Partner GbR

(57) **Zusammenfassung**

Es wird ein Melkverfahren beschrieben, das mittels Melkbecher mit Dünnwand-Massageflächen arbeitet.

## Beschreibung

Bei den konventionellen Melkverfahren zeit Dauervakuum wird im Massagetakt der Differenzdruck zwischen Innenraum an der Zitze, der immer dem Melkvakuum entspricht, und Atmosphäre, die von außen (Ringraum) auf den Zitzenschlauch einwirkt, gebildet. Bei diesen Melkverfahren muss die Rückförderung des Blutes im Massagetakt gegen das Melkvakuum erfolgen, dadurch ist ein relativ großer Massagedruck erforderlich. Hinzu kommt, dass bei den bekannten Zitzengummis durch ihre Wandungsstärke ein relativ hoher Einfaltdruck notwendig ist, die ein schonendes Anpassen an die Zitzenspitze bei der Massage verhindern, dadurch ist die Rückmassage des Blutes von der Zitzenspitze zur Zitzenbasis wenig effektiv, da sie entgegen dem hohen Melkvakuum unterhalb der Zitze arbeitet.

Alle diese bekannten Konstruktionen haben den Nachteil, dass die notwendige Rückmassage der Blutansammlung in der Zitzenspitze (passive Hyperämie), herrührend vom Saugtakt, ungenügend erfolgt, so dass die bekannten Nachteile, verhärtete sowie rote bis blaurote Zitzenspitzen, auftreten, die eine Schädigung der Schleimhautauskleidung des Strichkanals (Bakteriensperre) verursachen, so dass eine erhöhte Mastitisanfälligkeit die Folge ist.

Ein bekanntes Melkverfahren verhindert mit Erfolg die oben genannten Nachteile des konventionellen Melkverfahrens, in dem im Innenraum an der Zitze beim Massagetakt das Vakuum bis nahe Atmosphärendruck abgesenkt wird. Um bei diesem Melkverfahren eine wirkungsvolle Massage zu erreichen, muss zur Erzeugung eines Differenzdrucks zum Innenraum in den Außenraum (Ringzaum) des Melkbechers positiver Überdruck eingeleitet werden, wozu eine Überdruckversorgung zu jedem Melkplatz notwendig wird.

Bei dem erfindungsgemäßen Mehrverfahren, das mittels Melkbecher mit Dünnwandmassageflächen arbeitet, erfolgt eine Reduzierung des Vakuums im Innenraum (unterhalb der Zitze) beim Massagetakt. Dabei ist wesentlich, dass diese Reduzierung des Vakuums im Massagetakt erfolgt, sowohl beim Milchfluss, wie auch von besonderer Bedeutung, wenn keine Milch fließt, um beim Ausmelken der Restmilch keinen störenden Schmerzfaktor zu verursachen. Der Differenzdruck von außen (auf die Dünnwandmassageflächen) wird lediglich durch Atmosphärendruck gebildet. Durch die dünnwandigen Massageflächen des Zitzenschlauchs im Bereich der Zitze wird infolge des geringen Einfaltdrucks von max. 10 kPa und vorzugsweise etwa 5 kPa (Einfaltdruck = der Differenzdruck, der benötigt wird, dass bei einem in einer Melkbecherhülse eingespannten Zitzenschlauch ein Berühren der gedachten Mittelachse erfolgt) des Zitzenschlauchs trotz geringen Differenzdrucks zwischen außen (z. B. Ringraum) und einer Reduzierung des auf die Zitze einwirkenden Vakuums im Innenraum eine effektive Rückmassage des Blutes erreicht, da der Rückmassage der Blutansammlung in der Zitzenspitze, herrührend vom Saugtakt, nur ein stark reduziertes Vakuum entgegenwirkt. Die bereits erwähnten Nachteile des konventionellen Melkens (mit Dauervakuum) treten nicht auf. Es werden die Vorteile des bekannten Melkverfahrens erreicht, das im Innenraum an der Zitze beim Massagetakt das Vakuum bis nahe Atmosphäre reduziert und im Außenraum des Melkbechers (Ringraum oder auch Rückseite von auch dünnwandigen Massageflächen) positiven Überdruck benutzt.

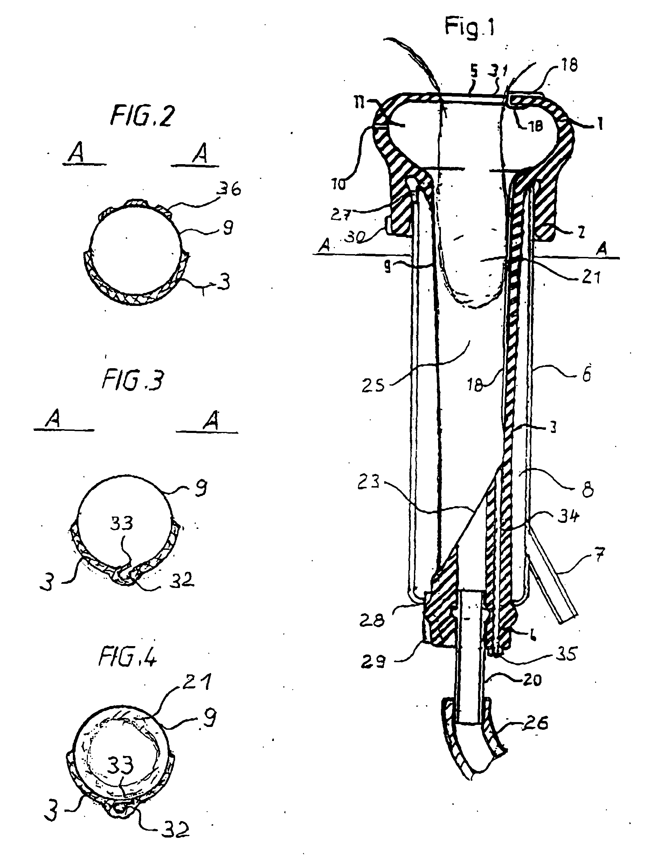

Bei denn. erfindungsgemäßen Melkverfahren ist es von großem Vorteil, dass für dieses Melkverfahren eine Installation einer Überdruckversorgung nicht notwendig ist, so dass dies insbesondere bei Umstellung von konventionellen Anlagen eine wesentliche Vereinfachung bedeutet. Die Vorteile des Melkverfahrens im Sinne der Erfindung werden dadurch erreicht, dass unter Verwendung von dünnwandigen Massageflächen an der Zitze im. Massagetakt bereits ohne Milchfluss eine Reduzierung des Melkvakuums im Innenraum an der Zitze auf -10 bis -25 kPa erfolgt, während die Außenseite der dünnwandigen Massagefläche mit Atmosphärendruck beaufschlagt und aufgrund des geringen Einfaltdrucks sehr schnell massierend wirksam wird.
Ferner besteht die Möglichkeit; eine eventuelle gewünschte Verstärkung der Massage der Zitze durch Längsrippen 36 zu erreichen, deren Flanken so geformt sind, wie in Fig. 2 im Querschnitt A~A gezeigt, dass sie keine wesentliche Erhöhung des Einfaltdrucks bewirken.

Besonders vorteilhaft ist es, wenn die Reduzierung des Vakuums durch einen Abschluss oder eine Drossel beim Massagetakt im Melkbecher direkt unterhalb der Zitze erfolgt und mittels einer Verbindung zur Atmosphäre, zwischen Abschluss- oder Drosselstelle und Zitzenspitze angebracht, die Reduzierung des Vakuums mittels Atmosphäreneinlass für Innenraum an der Zitze erreicht und der Milchabtransport unterstützt wird. Die Drosselung kann auch an einem anderen Punkt im abführenden Milchschlauch oder auch im Sammelstück erfolgen, jedoch wird in diesem Fall eine größere Luftmenge zur Reduzierung des Vakuums benötigt, was die Milchqualität beeinträchtigen kann.

Die Figur 1 zeigt einen besonders vorteilhaften Zitzengummi in einem Zweiraummelkbecher im Sautakt, bei denn das Vakuum des Zitzengummiinnenraums 25 im Massagetakt, durch Einlass von Atmosphäre oder Leberdruck in den Melkbecherzwischenraum 8 das Vakuum unterhalb der Zitze 21 durch einen Schrägabschluss 23 mittels einer Dünnwand 9 abgeschlossen oder gedrosselt wird. Die Belüftung des Zitzengummiinnnenraums 25 erfolgt mit Atmosphäre mittels einer Rippe 18 oder Nut, die sich vom Kopfraum 11 bis unterhalb der Zitze 21 erstreckt. Die Verbindung des Kopfraums 11 zur Atmosphäre kann entweder ebenfalls mittels einer Zuluftrippe 18, die auch über die Kopfseite geführt ist und so eine gewollte Undichtheit bezweckt, oder einer Düse 10 erfolgen. Durch diese Belüftung wird erreicht, dass bei Milchfluss die Flüssigkeitssäule unterhalb der Zitze 21 abgelöst wird und weiter nach Abschluss oder Drosselung des Vakuums durch die Dünnwand 9 auf den Schrägabschluss 23 eine Entlastung des Zitzenaufnahmeraumes 25 vom Vakuum bis nahe Atmosphäre erfolgt. Die Dimensionierung der Rippe 18 oder Nut erlaubt eine Definierung der gewünschten Zuluft an der Rippenkante bzw, in der Nut.
In Figur 3 wird eine besonders günstige Ausführungsform, des Zitzenschlauchs im Querschnitt gezeigt. Der Dünnwandbereich 9 erstreckt sich etwa über die Hälfte des Umfangs. Die andere Hälfte 3 ist dickwandiger. In dem dickwandigeren Teil 3 kann statt der Zuluftrippe 18 vorzugsweise ein Zuluftkanal 32 verwendet werden, dessen Lippe 33 im spannungsfreien Zustand geöffnet ist. Im Bereich des Andrucks der Zitze 21 auf die Lippe 33 entsteht ein geschlossener Kanal (Figur 4) in welchem die Atmosphäre vom Kopfraum 11 bis unterhalb der Zitzenspitze ungehindert geleitet wird. Diese Kanalkonstruktion hat die Vorteile, dass die Vorbeileitung der Atmosphäre an der Zitze unabhängig vom Hautgewebe erfolgt und dass sie im spannungsfreien Zustand geöffnet ist und so beim Reinigungsvorgang problemlos gereinigt werden kann. Diese Ausgestaltung eines Zuluftkanals ist für alle Arten von Zitzengummis von wesentlicher Bedeutung und unabhängig von der speziellen Ausführungsform der vorliegenden Erfindung.
Eine Verbindung zur Atmosphäre kann beispielsweise auch mittels einer Verbindung 34 über eine Düse 35 erfolgen.
Bei dem erfindungsgemäßen Zitzengummi mit Schrägabschluss in einem Zweiraummelkbecher kann je nach gewünschtem Differenzdruck zum Innenraum 25 der Melkbecherzwischenraum 8 über den Anschluss 7 mit Atmosphäre oder Überdruck versorgt werden.

Um eine Verdrehung des Zitzengummis in der Längsachse zu verhindern sind Noppen 27 und 28 angebracht, die in entsprechende Ausnehmungen der Melkbecherhülse einrasten. Für die Montage besonders vorteilhaft ist, dass die Lage der Noppe 27 von außen durch die Rippe 30 gekennzeichnet ist. Die Noppe 28 ist über den Rastpunkt hinausgeführt bis 29, so dass beim Einziehen des Zitzengummis die untere Ausnehmung der Melkbecherhülse bereits vor Einrasten durch die Noppe bei 29 geführt ist.

Ferner zeigt diese Ausführungsvariante einen Zitzengummi mit Schrägabschluss mit einem bei 4 eingesteckten Schauglas 20, das aus durchsichtigem Material ist und auf dem der Milchschlauch 26 aufgesteckt ist.

Eine weitere mögliche Ausführungsform eines Zitzengummis mit Schrägabschluss durch Dünnwandbereich besteht darin, dass die spezielle Dichtlippe 31 an der Einführungsöffnung S des Zitzengummikopfes 90° zur Längsachse gesehen wellenförmig verläuft. Durch diese Ausbildungsform ist es möglich, einen größeren Bereich von Zitzendurchmessern zu erfassen, als dies bei einer Einführungsöffnung in einer Ebene liegend der Fall ist, wo der größere Zitzendurchmesser nur durch Dehnung der Dichtlippe 31 aufgenommen werden kann. Bei der Dichtlippe 31 in der Form eines Wellenbogens kann die Anlagekraft durch die Form des Wellenbogens (Radius) oder auch durch Materialdicke, der die Dichtlippe 31 tragenden Stirnwandung des Zitzengummikopfes 1, bestimmt werden, ohne dass bei dickeren Zitzen ein Abschnürungseffekt eintritt.

### Bezugszeichenliste

- 1: Zitzengummikopf
- 2: Kopfmuffe
- 3: Zitzengummiwandung dick
- 4: Einsteckbereich Schauglas
- 5: Einführungsöffnung
- 6: Melkbecher
- 7: Anschluss
- 8: Melkbecherzwischenraum
- 9: Dünnwand
- 10: Düse
- 11: Kopfraum
- 18: Zuluftrippe
- 20: Schauglas
- 21: Zitze
- 23: Schrägabschluss
- 25: Zitzenaufnahmeraum
- 26: Milchschlauch
- 27: Rastnoppe
- 28: Rastnoppe
- 29: Führungsnoppe
- 30: Kennzeichnungsrippe
- 31: Dichtlippe
- 32: Zuluftkanal
- 33: Lippe
- 34: Verbindungsleitung
- 35: Düse
- 36: Längsrippen

## Patentansprüche

1. Melkverfahren mittels Melkbecher mit einem zur Zitzenaufnahme bestimmten Schlauchteil mit zumindest einer Dünnwand-Massagefläche und mit Reduzierung des Vakuums im Innenraum beim Massagetakt,
**dadurch gekennzeichnet,**
**dass** im Massagetakt unterhalb der Zitze im Innenraum des zur Zitzenaufnahme bestimmten Schlauchteils eine Reduzierung des Vakuums auf etwa -10 bis -25 kPa bei fehlendem Milchfluss erfolgt, und dass die Außenseite des Schlauchteils mit zumindest einer Dünnwand-Massagefläche mit Atmosphärendruck beaufschlagt wird.

2. Melkverfahren nach Anspruch 1,
**dadurch gekennzeichnet,**
**dass** bei Milchfluss diese Werte wenigstens annähernd eingehalten werden.

3. Melkverfahren nach Anspruch 1 und 2,
**dadurch gekennzeichnet,**
**dass** sich eine Abschluss- oder Drosselstelle bezüglich der das Vakuum erzeugenden Quelle im Aufnahmeraum des Zitzenschlauchs unterhalb der Zitze befindet.

4. Melkverfahren nach Anspruch 1 bis 3,
**dadurch gekennzeichnet,**
**dass** zwischen Zitzenspitze und Abschluss- oder Drosselstelle in der milchführenden Leitung eine Verbindung zur Atmosphäre dauernd oder zeitweise besteht.

5. Melkverfahren nach einem der vorhergehenden Ansprüche,
**dadurch gekennzeichnet,**
**dass** der zur Zitzenaufnahme bestimmte Schlauchteil mit wenigstens einer Dünnwandmassagefläche vor dem Wirksamwerden der Abschluss- oder Drosselstelle mit der Volumenverringerung und der dadurch bedingten Massage beginnt.

6. Melkverfahren, insbesondere nach einem der vorhergehenden Ansprüche,
**dadurch gekennzeichnet,**
**dass** zumindest eine Atmosphärenverbindung vom Kopfraum (11) bis unterhalb der Zitze durch einen offenen Kanal (32) geschaffen wird, der durch eine bewegliche Lippe (33) zumindest im Zitzenaufnahmebereich durch Andruck der Lippe in einen röhrenförmigen Kanal überführbar ist.

7. Zitzengummi mit Schrägabschluss, insbesondere zur Durchführung des Verfahrens nach einem der vorhergehenden Ansprüche,
**dadurch gekennzeichnet,**
**dass** eine Düse (10) zur Ermöglichung eines Zutritts der Atmosphäre in den Kopfraum (11) vorgesehen ist.

8. Zitzengummi nach Anspruch 7,
**dadurch gekennzeichnet,**
**dass** Rastnoppen (27, 28) angebracht sind, deren Lage von außen mittels einer Rippe (30) **gekennzeichnet** ist oder die Rastnoppe (wie bei 28) so zu einem Ansatz (29) verlängert ist, dass sie bei der Montage vor dem Einrasten die Führung übernimmt.

9. Zitzengummi nach Anspruch 7,
**dadurch gekennzeichnet,**
**dass** sich vom Kopfraum (11) bis in den Bereich unterhalb der Zitze zumindest ein in der Schlauchwandung ausgebildeter Luftführungskanal erstreckt, dem zumindest im Zitzenaufnahmebereich eine den Kanal im anliegenden Zustand überdeckende und in einen rohrförmigen Kanal überführende Lippe zugeordnet ist.
